# EUROPEAN PATENT APPLICATION

(11) **EP 0 942 570 A2**
(43) Date of publication of application: **15.09.1999**
(21) Application number: 99660040.9
(22) Date of filing: 03.03.1999
(51) Int. Cl.: H04M 1/60, H04M 1/72

(54) **Portable communication device with a loudspeaker having a double functionality**

(30) Priority: 13.03.1998 FI 980559
(71) Applicant: NOKIA MOBILE PHONES LTD., 02150 Espoo (FI)
(72) Inventor: Rintala, Mika, 33800 Tampere (FI)
(74) Representative: Pursiainen, Timo Pekka

(57) **Abstract**

A communication device (9) comprises a first audio signal source (CMT) for producing a wide-band audio signal, a second audio signal source (PDA) for producing a narrow-band audio signal, and a converter (5) for converting said wide-band and narrow-band audio signals to an acoustic signal. The communication device (9) comprises further an audio amplifier (4) for amplifying the audio signal before transmitting it to the converter (5). Both the wide-band and the narrow-band audio signals are arranged to be transmitted to said audio amplifier (4) for amplification.

## Description

The present invention relates to a communication device according to the preamble of the appended claim 1 and to a method according to the preamble of the appended claim 10.

A mobile station operating in a cellular network has become a common and frequently used personal data transmission means. In addition to normal telephone functions, wireless communication devices are developed, in which also data processing features, for example calendar functions, notebook functions, or the like are established. One example of such a device is the Nokia 9000 Communicator, which is a relatively small, portable device with data processing functions and mobile station functions. The term "communication device" will be used for such a device in this description. In such a communication device according to prior art, two user interfaces (Ul) are used, the first of which is substantially a mobile phone user interface and the second is substantially a data processing user interface. The first user interface (CMT) is optimized for using the communication device primarily as a conventional mobile station. The second user interface (PDA), for its part, is optimized for using the communication device as a versatile organizer and as a telecommunication terminal, from which, however, e.g. also calls can be made. These user interfaces are independent of the use of the communication device, in other words they can be used irrespectively of each other. These user interfaces comprise for example a keypad, a display unit and audio means. These audio means comprise in mobile station functions typically at least one microphone and at least one speaker/receiver, for making the modifications between an electric audio signal and acoustic signal. The audio means of the data processing functions typically comprise a buzzer for producing different signal tones. These signal tones produced by means of the buzzer include an alarm tone produced by a calendar application, a signal tone indicating the pressings of the keys, etc. If necessary, the audio elements of the user interface of the mobile station functions are used for generating as outputs, for example, speech signal, ringing tones and tones of the keys of the mobile station functions. To generate these outputs, it is possible to use, for example, one or more speakers. The audio means of the mobile station functions are typically required of a wider band-width and better sound quality than the audio means utilized in data processing functions, which are usually used for generating monotonic buzzer tones or the like in a narrow audio frequency range. Typically, the audio signals of the data processing functions have a narrow band width with a frequency range between 1 and 3 kHz. Correspondingly, the band width of the audio signals of mobile station functions is typically from ca. 500 Hz to 5 kHz.

Such a communication device of prior art is intended to be utilized also in a way that both functions can be used simultaneously. For achieving this, the communication device comprises an ordinary earphone speaker for using the device as a handset of a telephone and a second HF (Hands Free) speaker for using the device, for example, on a table after a fashion of a "speaker-call". Thus, the communication device is placed e.g. on a table, and the cover part is opened, wherein the user interface of the data processing functions is set in operation mode. Simultaneously, a call may be under way on the mobile station functions side, wherein the volume intensity of the sound signal leaving the HF speaker is increased compared to the operation mode, in which the communication device is used after a fashion of a receiver as a telephone, wherein the earphone speaker of the mobile station functions is close to the ear of the user. Also the audio means of the user interface of data processing functions are located further away from the user, wherein a greater intensity of the sound signal is required in this function. This so-called hands-free facility is presented in more detail in the previous public Finnish patent application FI-955683 by the applicant.

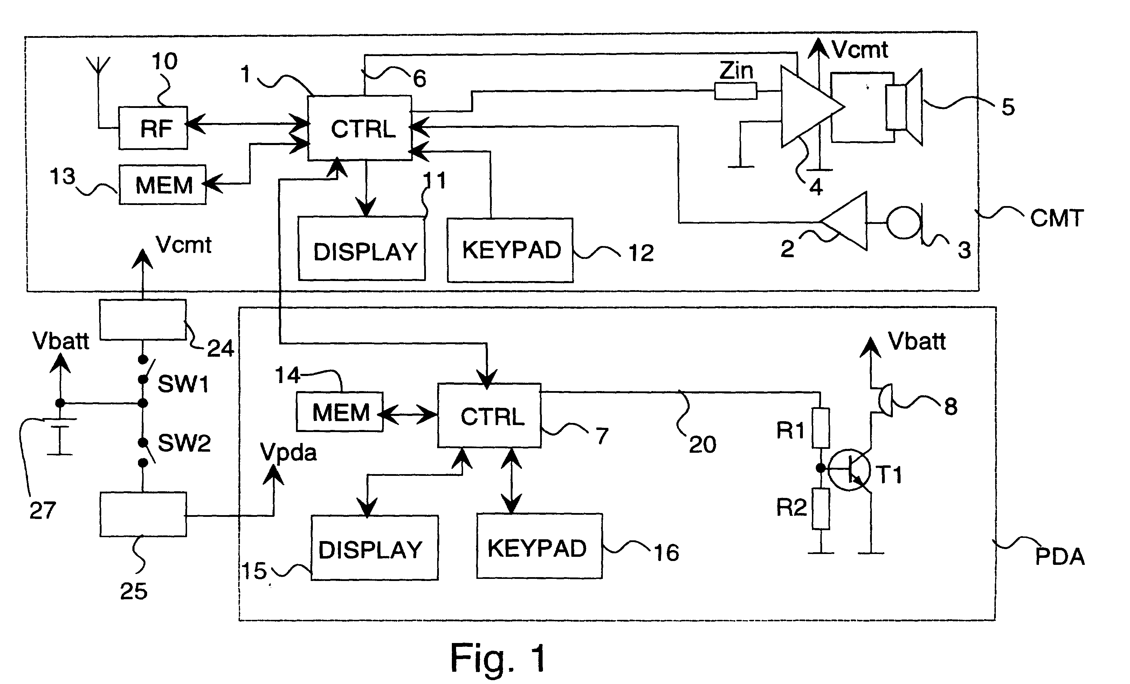

Fig. 1 presents in a reduced block diagram the implementation of the various user interfaces of one such communication device of prior art. The communication device contains two speakers, an HF speaker and an earphone speaker, and also a buzzer. In Fig. 1 the blocks for implementing mobile station functions are separated with a broken line and marked with the reference CMT. Correspondingly, another broken line, marked with the reference PDA, is used for separating blocks for implementing data processing functions. For controlling the mobile station functions CMT, a first control unit 1 is arranged, which comprises, in a way known as such, for example a micro controller unit (MCU) or a microprocessor (CPU, Central Processing Unit), analog/digital converters, digital/analog converters, memory (MEM) etc. To the first control unit 1, via microphone amplifier 2, a microphone 3 is connected. The audio signals are transmitted from the first control unit 1 through input impedance Zin to an audio amplifier 4 and further to a HF speaker 5. The input impedance consists, for example, of a connection in series of a capacitor and a resistance. To the shutdown SD of the audio amplifier 4, a connection line 6 of the audio amplifier is conducted, by means of which the audio amplifier can be set on and off when necessary. This connection line 6 is controlled advantageously with a two-level signal generated in the first control unit 1. In this exemplary connection, the shutdown is a so-called low active input, i.e. the audio amplifier 4 is operating with the voltage rating ca. 0 V and correspondingly, the audio amplifier 4 is not operating with a voltage rating corresponding approximately to the operating voltage Vcmt of the mobile station functions.

As known, the user interface of the mobile station functions advantageously comprises a first display device 11 and a first keypad 12, and the user interface of the data processing functions advantageously contains a second display device 15 and a second keypad 16.

A central unit in implementing the data processing functions is a second control unit 7 presented in Fig. 1. This second control unit 7 also comprises, for example, a micro controller, memory etc. To this second control unit 7 a buzzer 8 is connected via a transistor T1 and resistances R1, R2. The transistor T1 and the resistances R1, R2 constitute a switch whereby the buzzer 8 can be set on if necessary.

In such a solution according to prior art, for producing audio signals of two user interfaces with a sufficiently high sound, one drawback is that the separate units of HF speaker 5 and buzzer 8 occupy space in the circuit board. The frequency band of the buzzer is poor, which impairs the sound quality of the buzzer 8. In addition, these components are relatively heavy, which places higher requirements on their mechanical fastening. Furthermore, one problem to be mentioned is that placing several audio components in one device requires that the features of these components are to be taken into account when designing the structure of the casing. For each audio component an opening system has to be arranged, through which the acoustic waves can be transmitted outside the casing. The design of these opening systems largely affects the sound reproduction and sound attenuation features. Also, these opening systems cause problems especially with respect to sealing, because these communication devices may be exposed to difficult operating conditions during the use, especially when used outside. Thus, the aim is to seal these audio components in such a way that moisture does not reach the inner space of the casing through these opening systems of the audio components.

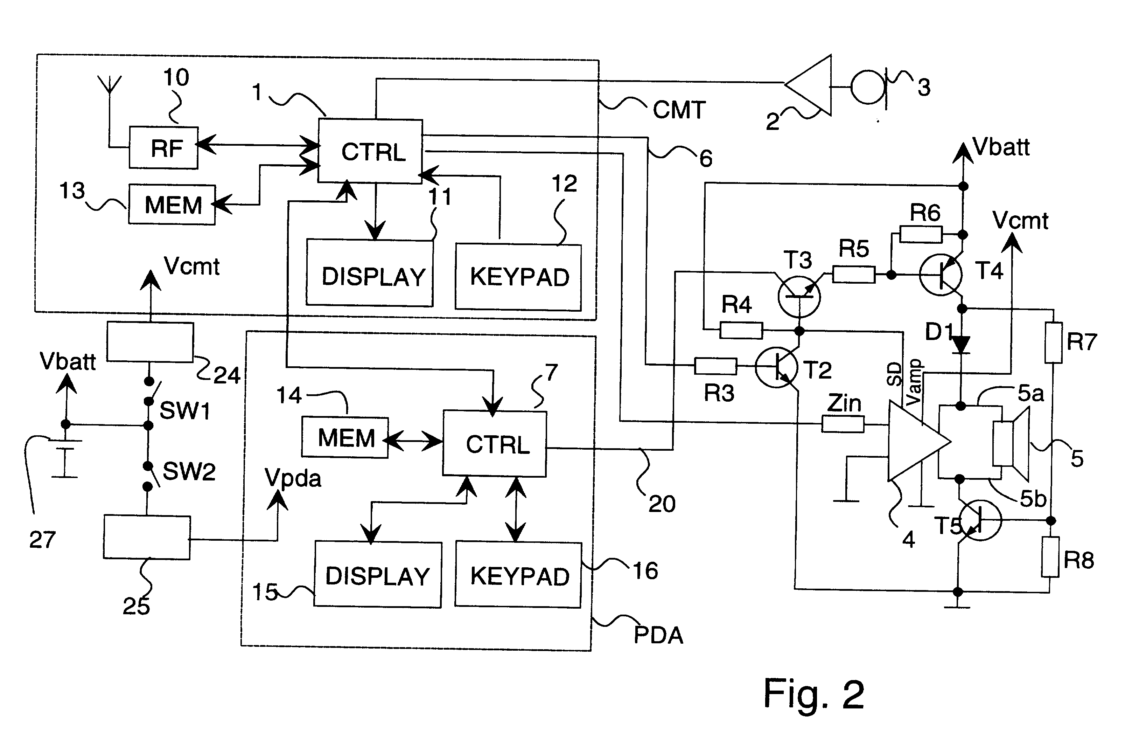

To replace the aforementioned two separate audio sources (HF speaker 5 and buzzer 8) with one HF speaker 5, a solution presented in the enclosed Fig. 2 was developed. The reduced circuit diagram in Fig. 2 presents how the buzzer 8 used in data processing functions is replaced with a control coupling set up in connection with the HF speaker 5 used in mobile station functions. This control coupling comprises four transistors T2, T3, T4, T5, six resistances R3, R4, R5, R6, R7, R8 and a diode D1. The coupling operates in the following way. The transistors T2, T3, T4, T5 are primarily used as switches. When the HF speaker 5 is used in connection with mobile station functions, for example, for repeating the speech signal, a voltage which corresponds to the switching-on of the audio amplifier 4 prevails in the connect line 6 of the audio amplifier. This voltage is conducted via the resistance R3 to the transistor T2, which starts to conduct i.e. corresponds to turning the switch off. Thus the voltage of the collector of this transistor T2 is close to 0 V, which causes the setting of the third transistor T3 in a non-conducting state, i.e. corresponds to turning the switch on. The voltage of the collector of the third transistor T3 is in this state close to the operating voltage Vbatt of the control coupling, wherein also the fourth T4 and fifth T5 transistors are in a non-conducting state and do not substantially affect the operation of the audio amplifier. In addition, the shutdown SD of the audio amplifier 4 is connected to the collector of the second transistor T2, wherein in this situation, the audio amplifier is set on and an amplified audio signal is transmitted from the mobile station block CMT to the HF speaker 5.

Operating voltage Vamp is conducted to the audio amplifier 4 from the operating voltage Vcmt of the mobile station functions CMT, because the audio amplifier 4 does not need a operating voltage in this coupling when the mobile station functions CMT are not set on.

For producing a sound signal from the data processing functions in the HF speaker 5, the connect line 6 of the audio amplifier is set in a blocking state, which in this example is c. 0 V. Furthermore, from the second control unit 7 to the collector of the third transistor T3 operating as a switch, a buzzer line 20 is conducted, through which it is possible to set the fourth transistor T4 in a conducting state when the second transistor T2 is set in a non-conducting state. This is achieved by setting approximately the operating voltage Vbatt in the connect line 6 of the audio amplifier. Thus the third T3, fourth T4 and fifth T5 transistor start to conduct. The fourth transistor T4 conducts the operating voltage to the first feed line 5a of the HF speaker 5, and the fifth transistor T5, correspondingly, sets the second feed line 5b of the HF speaker 5 at approximately 0 V (GND, Ground). As a result, the HF speaker 5 produces an audio signal. The diode D1 prevents the operation of the fifth transistor T5 in a situation where the HF speaker 5 is used in connection with mobile station functions.

A drawback in this solution according to Fig. 2 is, for instance, that it requires several auxiliary components, for example three transistors, wherein the circuit board space saved in removing the buzzer 8 has to be used at least partly for installing these auxiliary components in the circuit board. Furthermore, a high sound quality in connection with data processing functions cannot be achieved with this coupling, as the transistors T4 and T5 primarily function only as switches.

One purpose of the present invention is to produce a communication device, in which one speaker can be used in connection with the audio functions of two separate user interfaces. A communication device according to the invention is primarily characterized in what will be presented in the characterizing part of the appended claim 1. A method according to the invention is characterized in what will be presented in the characterizing part of the appended claim 10. The invention is based on the idea that for producing audio signals of separate user interfaces, one speaker is used, to which the signals of the user interfaces are transmitted via a summing connection. In the summing connection, at least one shutdown is also advantageously established, by means of which it can be selected from which source a sound signal is transmitted to the HF speaker.

The present invention gives considerable advantages to the solutions of prior art. Space is saved on the circuit board of the communication device, because the number of the auxiliary components replacing the buzzer is smaller than in the solutions of prior art. This decreases assembling work, wherein the manufacturing costs are also reduced. Moreover, the smaller number of components has an effect on the decrease in the probability of defects and need for maintenance. Furthermore, the design of the casing of the communication device according to the invention is freer, because the number of the required openings for the audio signals is smaller than in communication devices implemented with separate audio components. This also facilitates the sealing of the casing. Another advantage is that the sound quality is improved, thanks to a wider frequency band.

In the following, the invention will be described in more detail with reference to the appended figures, in which
- Figs. 1 and 2: show solutions of prior art in reduced block diagrams,
- Fig. 3: shows a connection according to an advantageous embodiment of the invention in a reduced manner,
- Fig. 4a: shows a connection according to a second advantageous embodiment of the invention in a reduced manner,
- Fig. 4b: shows a connection according to a third advantageous embodiment of the invention in a reduced manner, and
- Fig. 5: shows a connection according to yet another advantageous embodiment of the invention in a reduced manner,
- Fig. 6a: shows in perspective view a communication device according to an advantageous embodiment of the invention in a first operating position, and
- Fig. 6b: shows in a perspective view a communication device according to an advantageous embodiment of the invention in a second operating position.

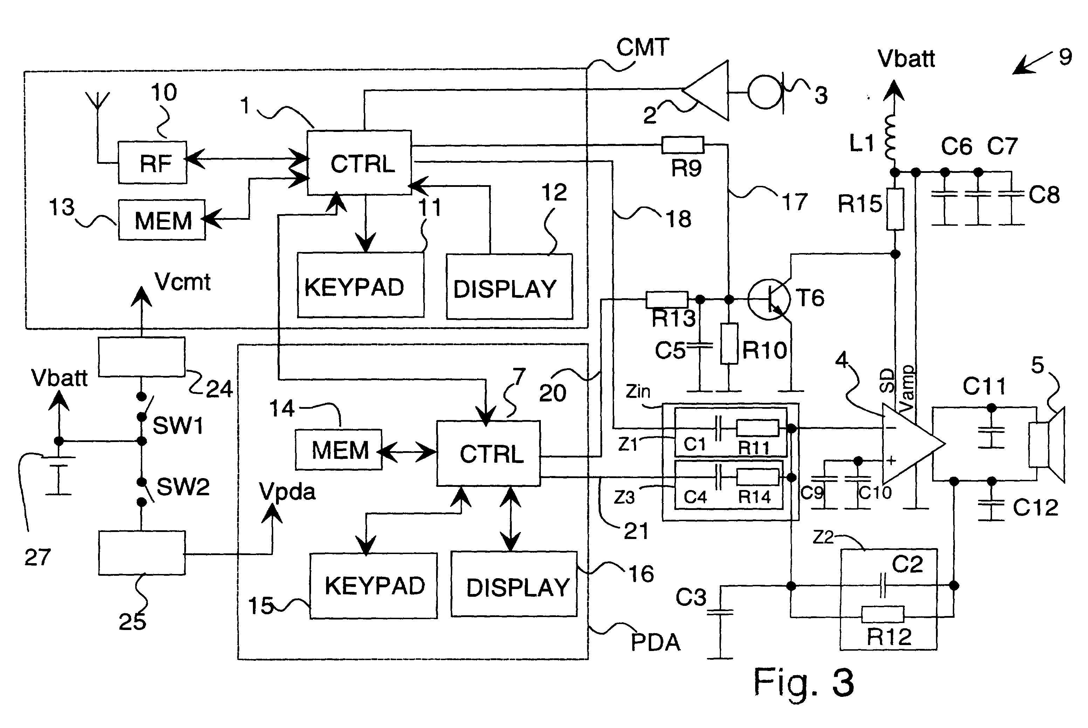

Earlier in this description, solutions of prior art have been discussed with reference to Figs. 1 and 2; therefore, in the following the invention will be described primarily on the basis of the circuit diagram of Fig. 3.

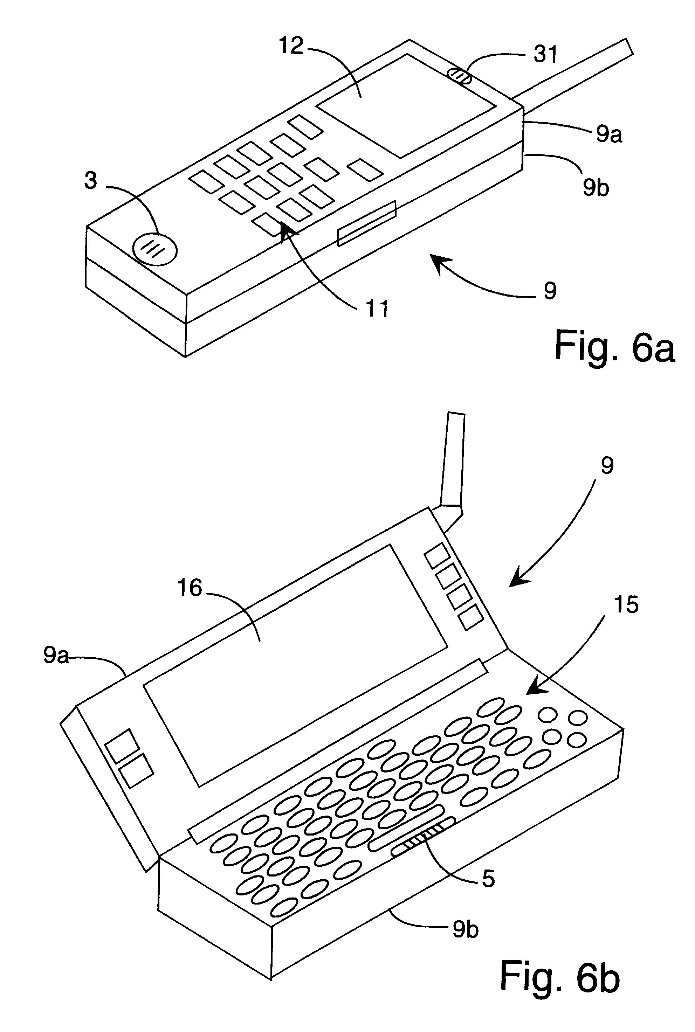

The circuit diagram of Fig. 3 primarily presents blocks most essential for understanding the invention. A communication device 9 comprises mobile station functions CMT and data processing functions PDA. The mobile station functions CMT comprise, for instance, a first control unit 1, which comprises, for example a micro controller and an application-specific integrated circuit (ASIC); a radio unit 10, (RF, Radio Frequency), a first display device 11, a first keypad 12, and memory means 13. In the mobile station functions CMT, a microphone 3 is used for converting an acoustic signal to an electric audio signal, and either an earphone speaker 31 (Fig. 6a) or a HF speaker 5 is used for converting an electric signal to an acoustic signal. The audio signals of the mobile station functions CMT are typically wide-band. The mobile station functions CMT contain, for example, functions according to the GSM system, wherein it is possible to arrange the communication device 9 in a data transmission connection to the GSM mobile communication network (not shown).

It is also possible to implement the mobile station functions CMT without the display device 11, and the keypad 12 can be a simple keypad without alphanumeric characters, or the keypad 12 can even be excluded completely, wherein, for example, a roller ball can be used to control the mobile station functions CMT.

The data processing functions PDA contain, for instance, a second control unit 7, a second display device 15, a second keypad 16, and second memory means 14. It is obvious that, for instance, said first 1 and second control unit 7 as well as the first 13 and second memory means 14 can in practical applications comprise shared components. Also the first 11 and the second display device 15 as well as the first 12 and the second keypad 16 can comprise shared components and/or they can be used in connection with both mobile station functions and data processing functions. For example, from the mobile station functions CMT, data can be transmitted, such as a short message (SM), to the data processing side to be presented in the second display device 15. This is presented as a data transmission line 26 in the communication device 8 of Fig. 3. It is obvious that in practical applications this data transmission can be implemented in several different ways and it is prior art known by a man skilled in the art, and it has no significance with respect to applying this invention. Data transmission can also be implemented by using at least partly shared memory means, in which, for example, a common database is established for storing the receiver names and telephone numbers needed frequently by the user. Thus it is possible to avoid confusions that could be caused by data updated by means of different user interfaces, and in addition, the need for memory space is reduced.

The communication device 9 in Fig. 3 contains two operating switches SW1, SW2. The first operating switch SW1 is used to control the switching-on of the mobile station functions CMT and the second operating switch SW2 is used to control the switching-on of the data processing functions PDA. The operating switches SW1, SW2 are connected to a power supply, such as a battery 27. This preferred embodiment of the invention also includes a first power supply circuit 24 for establishing the required operating voltages Vcmt, Vpda for the mobile station functions CMT, and a second power supply circuit 25 for the data processing functions PDA.

One preferably binary output line of the first control unit 1 is used in the switching-on of the audio amplifier 4 in order to amplify the wide-band audio signals of the mobile station functions CMT, typically of the frequency range from 500 Hz to 5 kHz, and to conduct them to the HF speaker 5. One, preferably binary output line of the second control unit 7 is used correspondingly in the switching-on of the audio amplifier 4 in order to amplify the narrow-band audio signals of the data processing functions PDA, typically of the frequency range from 1 to 3 kHz, and to conduct them to the HF speaker 5. It is possible to set the voltage of these binary output lines to two values, typically to c. 0 V and to a voltage rating corresponding approximately to the operating voltage. It is obvious that instead of binary output lines, also analog output lines can be used, the voltage of which can be set at least to the said two different voltage ratings.

The connection of a control transistor T6 and the resistances R13, R9, R10 forms a so-called logical or switch, wherein the drive transistor T6 conducts if a control voltage, for example the operating voltage, is conducted to at least one of the control lines 17,20 of the audio amplifier. Instead, the control transistor T6 does not conduct if a control voltage is not conducted to either of the control lines 17, 20 of the audio amplifier, i.e. the voltage of the control lines 17, 20 is ca. 0 V. To the collector of the control transistor T6, a pull-up resistance R15 is connected, which is coupled via a reactor L1 preferably to the power supply of the communication device 9, such as battery Vbatt. Thus, the control transistor T6 operates according to the signals of the control lines 17,20 and sets on the audio amplifier 4, if an audio signal is transmitted from either of the audio sources. With the pull-up resistance R15, it is secured that if neither of the control lines 17,20 is active (the shutdown SD of the audio amplifier 4 active), the audio amplifier 4 is set off. If both control lines 17, 20 are active, the audio signals transmitted through the audio lines 18,21 are summed up in the audio amplifier 4, wherein they are heard simultaneously. The operating voltage Vamp is conducted to the audio amplifier 4 preferably directly from the power supply 27 of the communication device 9 via the reactor L1.

In the following we shall describe a situation where a call is received by the communication device 9. A data transmission connection to the mobile station network, e.g. GSM cellular network (not shown), is established in the mobile station functions CMT. The first control unit 1 sets in the first control line 17 of the audio amplifier a voltage rating, with which the control transistor T6 starts to conduct, i.e. a current starts to flow via a collector-emitter connection. This voltage rating is in practical applications, for example, a value corresponding substantially to the operating voltage Vcc. In this situation, a resistance connection R9, R10 is used for setting the base voltage of the driver transistor T6 to a suitable value, which for example with a silicon transistor is ca. +0.6 V with respect to the ground potential GND. The current flowing through the collector-emitter connection of the control transistor T6 also passes through the pull-up resistance R15, wherein the voltage of the collector falls close to 0 V. The collector of the control transistor T6 is connected to the shutdown of the audio amplifier 4, wherein this voltage rating of ca. 0 V brings about the switching-on of the audio amplifier 4.

The first control unit 1 transmits an audio signal to the first audio line 18 of the audio amplifier, wherein the audio amplifier amplifies this audio signal and transmits it further to the HF speaker 5. The amplification is determined in a way known as such from the ratio, Z2 to Z1, of the impedance Z1 of the first audio line and the impedance Z2 of the feedback circuit, because the audio amplifier 4 is a phase inverting amplifier connection implemented with an operating amplifier. The impedance Z1 of the first audio line consists of the connection in series of a capacitor C1 and resistance R11 and the feedback circuit impedance Z2 consists of the connection in series of a capacitor C2 and resistance R12. Between the phase inverting input (-) of the audio amplifier 4 and the ground potential GND, a filtering capacitor C3 is connected, the capacitance of which is relatively small compared to the capacitances C1, C2 of the amplifier connection, whereby its effect on the amplification is practically insignificant. The filtering capacitor C3 is intended primarily to prevent high frequency signals from entering the audio amplifier 4. The non-inverting input (+) of the audio amplifier 4 is capacitively connected by means of capacitors C9 and C10 to the ground potential, wherein the audio amplifier 4 operates as a phase inverting amplifier. It is obvious that the invention is not restricted solely to phase inverting amplifiers, but it can be applied with other amplifiers, such as non-inverting amplifiers as well.

In case a sound signal to be established in the data processing functions PDA has to be transmitted to the HF speaker 5, a voltage rating is set to the second control line 20 of the audio amplifier at which the control transistor T6 starts to conduct. With a resistance connection R13, R10, the base voltage of the control transistor T6 is set to a value at which the transistor starts to conduct, for example, with the silicon transistor said ca. 0.6 V. Also in this case, the voltage of the collector of the control transistor T6 falls close to 0 V, which brings about the switching-on of the audio amplifier 4. The second control unit 7 produces an audio signal to the second audio line 21 of the audio amplifier, wherein the audio amplifier amplifies this audio signal and transmits it further to the HF speaker 5. In this situation, the amplification is determined from the ratio, -Z2/Z3, of the impedances Z3, Z2 of the second audio line 21 and the feedback circuit 19. The impedance of the second audio line 21 consists of the connection in series of a capacitor C4 and resistance R14.

In a situation where it is not necessary to transmit audio signals to the HF speaker 5, the audio amplifier 4 can be set off. In a communication device according to Fig. 3, this can be implemented so that the first control unit 1 sets a voltage of c. 0 V to the first control line 17, and correspondingly the second control unit 7 sets a voltage of 0 V to the second control line 20. Thus the control transistor T6 does not conduct and the collector voltage of the control transistor T6, set by the pull-up resistance R15, is close to the operating voltage Vbatt, which causes that the audio amplifier 4 is set off.

Between the base of the control transistor T6 and the ground potential, a second filtering capacitor C5 is connected, for the purpose of preventing high frequency signals from entering the control transistor T6. A pull-up resistance R15 is connected to the collector circuit of the control transistor T6 and a reactor L1 in series therewith. The purpose of the reactor L1 is to prevent high frequency signals from entering the audio amplifier 4. Instead of the reactor L1, another filtering connection can be used as well, for example, a filtering connection composed of a resistance and a capacitor (not shown). Between the pull-up resistance R15 and the reactor L1 filtering capacitors C6, C7, C8 are connected to the ground potential GND, for the purpose of equalizing the collector voltage and connecting high frequency signals to the ground potential GND.

Between the output lines 22, 23 of the amplifier 4 and the ground potential GND, also filtering capacitors C11, C12 are connected in order to connect high frequency signals to the ground potential. The HF speaker 5 is connected to these output lines 22, 23 of the audio amplifier 4.

The control transistor T6 used for controlling the audio amplifier 4 can be replaced with another switch known as such, with a semi-conductor switch, a logic circuit or the like, whereby the audio amplifier 4 can be set on or off. By this switching-off of the audio amplifier 4 when there are no audio signals to be amplified, it is possible to reduce the power consumption of the communication device 9. Smaller power consumption extends the operating time of the communication device 9, especially if a battery 27 is used as a power supply in the communication device 9. The invention is not, however, restricted solely to such an embodiment, but it can be applied for example in such a way that the audio amplifier 4 is on always when the mobile station functions CMT or data processing functions PDA of the communication device 9 are set on.

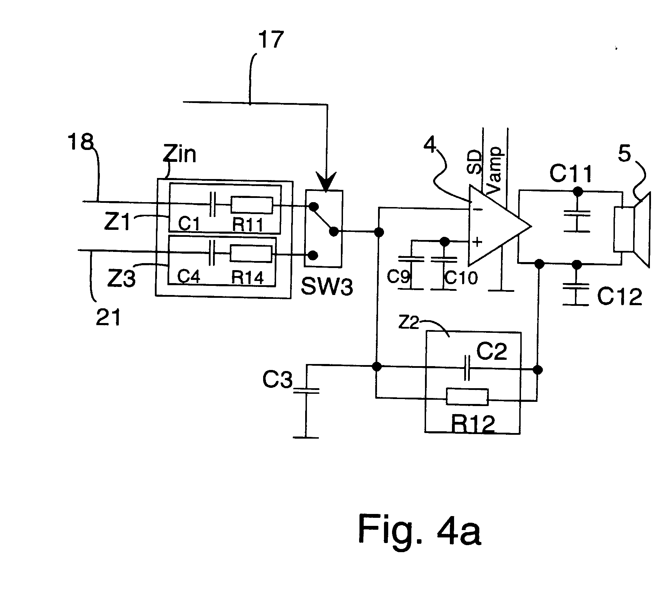

Fig. 4a presents another connection according to a second advantageous embodiment of the invention in a reduced manner. This connection differs from the connection of Fig. 3 primarily in that the selector switch SW3 is used for selecting the audio signal of which audio line 18, 20 is transmitted to the audio amplifier 4. The connection shows primarily only the features necessary for understanding this embodiment. In other respects, it is possible to apply, for example, the connection according to the first advantageous embodiment of the invention. In this connection, the selector switch is controlled with the first control line 17, wherein when the first control line 17 is in logical 1 state, the signal of the first audio line 18 is connected to the input of the audio amplifier 4. Correspondingly, when the first audio line 17 is in logical 0 state, the signal of the second audio line 18 is connected to the input of the audio amplifier 4. As a reversing switch SW3, an electrically controlled switch, advantageously a semi-conductor switch is used. It is obvious that instead of the reversing switch, two separate switches (not shown) can be used, one of which being connected to the input impedance Z1 of the first audio line 18 and the other being connected to the input impedance Z3 of the second audio line 21, wherein these switches are controlled by means of the corresponding control lines 17,20.

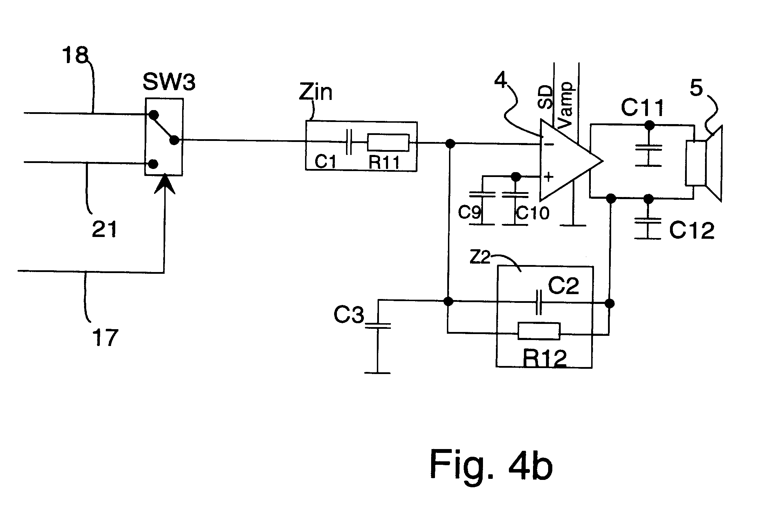

Fig. 4b presents still a connection according to a third embodiment of the invention. This connection differs from the connection of Fig. 4a primarily in that one input impedance Zin is used for the audio signals, wherein a reversing switch SW3 is used for controlling the connection of audio lines 18, 21 to this common input impedance Zin. In this connection the signals of both audio lines 18,21 have the same amplification. Also in this connection, primarily the features necessary for understanding this embodiment are presented.

There may be also more audio lines than the above described first 18 and second audio line 20. An audio line to the audio amplifier 4 can be arranged for, e.g., external audio lines running from inside the communication device, via an audio adapter 28 or via a system adapter (not shown). A separate control line may be arranged for each audio line, or a joint control line may be arranged for several audio lines.

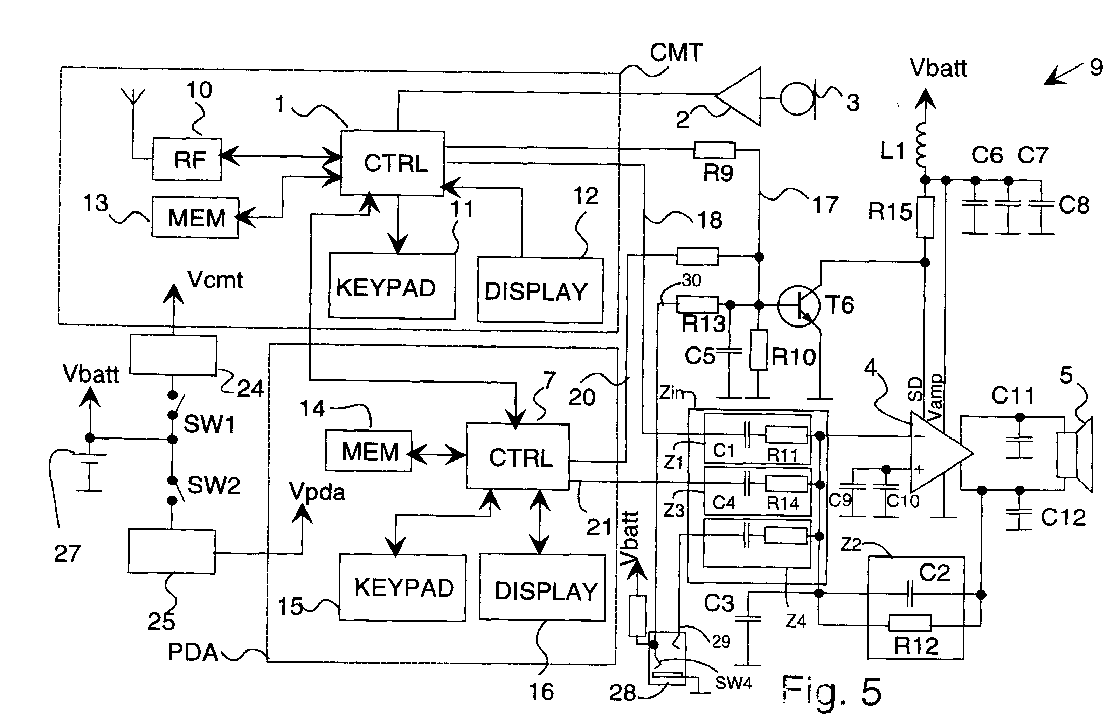

Fig. 5 presents as an example how an audio signal passing through the audio adapter 28 can be transmitted to the audio amplifier 4. From the audio adapter 28, an external audio signal line 29 is passed to a input impedance Z4, which is connected to the input of the audio amplifier 4. The audio adapter 28 contains advantageously a switch SW4, which connects an activation voltage to the external audio control line 30 by means of resistances R16 and R17, when an external audio source (not shown) is connected to the audio adapter 28. Otherwise, the switch SW4 connects the external audio control line 30 to the ground potential.

Figs. 6a and 6b further present as an example a communication device 9, with which the invention can be advantageously applied. The casing of the communication device comprises, for instance, a cover part 9a and a bottom part 9b. The cover part 9a and the bottom part 9b are attached to each other in such a way that the communication device 9 has two operating positions: the cover part 9a closed and the cover part 9a open. A microphone 3 and an earphone speaker 31 are placed either in the cover part 9a, as illustrated in the appended Fig. 6a, or in the bottom part 9b. Fig. 6a illustrates the communication device in the first operating position, in which the cover part 9a of the communication device is closed. Thus, the microphone 3 and the earphone speaker 31 are used as converters of the audio signal. In the second operating position according to Fig. 6b, the cover part 9a is open, wherein the HF speaker 5 and the user interface of the data processing functions, in this application a second display unit 15 and a second keypad 16, are exposed. In this operating position, the HF speaker 5 can be used both for converting the audio signals of the mobile station functions such as speech and ringing tone, and the audio signals of the data processing functions, such as keypad tones and alarm tones, to an acoustic signal.

Even though above the HF speaker 5 is used for converting an electric audio signal to an acoustic signal, it is also possible to use another electroacoustic converter instead of the HF speaker 5 for applying the invention.

## Claims

1. A communication device (9), comprising a first audio signal source (CMT) for producing a wide-band audio signal, a second audio signal source (PDA) for producing a narrow-band audio signal, and a converter (5) for converting said wide-band and narrow-band audio signals to an acoustic signal, **characterized** in that the communication device (9) comprises an audio amplifier (4) for amplifying the audio signal before transmitting it to the converter (5), and that both a wide-band and narrow-band audio signal is set to be transmitted to the same said audio amplifier (4) for amplification.

2. A communication device (9) according to claim 1, **characterized** in that it comprises means (Zin) for summing said wide-band and narrow-band audio signal for transmission to said audio amplifier (4).

3. A communication device (9) according to claim 1, **characterized** in that it comprises means (SW3) for selecting the audio signal to be transmitted to the audio amplifier (4) from said wide-band and narrow-band audio signals.

4. A communication device (9) according to claim 1, 2 or 3, **characterized** in that it also comprises means (R9, R13, T6, SD) for switching on said audio amplifier (4) for amplifying any of said audio signals.

5. A communication device (9) according to any of the claims 1 to 4, **characterized** in that a first audio signal is speech and a second audio signal is keypad tone, ringing tone or alarm tone.

6. A communication device (9) according to any of the claims 1 to 5, **characterized** in that the frequency range of the wide-band audio signal is essentially from 500 Hz to 5 KHz, and the frequency range of the narrow-band audio signal is essentially between 1 and 3 kHz.

7. A communication device (9) according to any of the claims 1 to 6, **characterized** in that it is a communication device comprising telephone and data processing functions (PDA), wherein the first audio signal source is an audio signal for the telephone functions (CMT) and the second audio signal source is an audio signal for the data processing functions (PDA).

8. A communication device (9) according to claim 7, **characterized** in that it comprises a casing arranged to be opened (9a, 9b), that the converter (5) is a HF speaker, and that the communication device (9) comprises also a second converter (31) repeating with a lower volume intensity.

9. A communication device (9) according to any of the claims 1 to 8, **characterized** in that it comprises means (28, 29, 30, SW4) for transmitting an audio signal from outside of the communication device (9) to the audio amplifier (4).

10. A method for converting an electric audio signal to an acoustic signal in a device (9), in which method wide-band audio signals are produced, narrow-band audio signals are produced, and said wide-band and narrow-band audio signals are converted to acoustic signals, **characterized** in that the audio signals are amplified before they are converted to an acoustic signal, and that both the wide-band and the narrow-band audio signals are transmitted to one and the same audio amplifier (4) for said amplification.

11. A method according to claim 10, **characterized** in that said wide-band and narrow-band audio signals are summed before they are transmitted to said audio amplifier (4).

12. A method according to claim 10, **characterized** in that from said wide-band and narrow-band audio signals, an audio signal is selected to be transmitted at a given time to said audio amplifier (4).
